# EUROPEAN PATENT APPLICATION

(11) **EP 1 617 242 A1**
(43) Date of publication of application: **18.01.2006**
(21) Application number: 04077009.1
(22) Date of filing: 12.07.2004
(51) Int. Cl.: G02B 5/30, H01B 1/20

(54) **Process for producing a composition, comprising nano particles**

(71) Applicant: DSM IP Assets B.V., 6411 TE Heerlen (NL)
(72) Inventor: Jahromi, Shahab, 6216 TE Maastricht (NL)
(74) Representative: Dorrestijn, Antoon

(57) **Abstract**

Process for producing a composition comprising nano particles, comprising the steps of,
a) bringing a composition comprising a liquid crystal compound and elongated nano particles at a condition wherein the liquid crystal compound is in the liquid crystal state,
b) orientation of the liquid crystal compound and the elongated nano particles
c) fixation of the so obtained orientation.

## Description

The invention relates to a process for producing a composition, comprising nano particles.

Processes for the production of such compositions are known. Various thermoplastic polymers are mixed with nano particles and the so obtained polymeric compositions are processed into shaped objects, having all kind of properties. Also resins and elastomers are frequently mixed with nano particles, shaped and cured to obtain shaped objects of the composition.

There is a need for further compositions comprising nano particles, having special properties.

Aim of the invention is to provide such a composition. This aim is achieved by a process for producing a composition, comprising nano particles, the process comprising the steps of,
a) bringing a composition comprising a liquid crystal compound and elongated nano particles at a condition wherein the liquid crystal compound is in the liquid crystal state,
b) orientation of the liquid crystal compound and the elongated nano particles
c) fixation of the so obtained orientation.

In this way a composition is obtained having anisotropic physical and mechanical properties, like stiffness, strength, conductivity or magnetic properties.

Examples of elongated nano particles are given in Angew. Chemie, 2002, 41 and comprise but are not limited to elongated SiO₂, VOₓ , MoO₃, carbon nano tubes and elongated particles of various metals, for example Aluminum (Al), Copper (Cu) and lron (Fe).

In a preferred embodiment, the majority of the nano particles in the composition have a length of less than 5 microns, more preferably the majority of particles have a length of less than 2 microns. In the most preferred embodiment, the majority of the nano particles have a length in the range of 200 - 2000 nm.

Preferably the nano particles have an aspect ratio (length/diameter) greater than 2, more preferably, they have an aspect ratio greater than 3, still more preferably greater than 5, and most preferably, they have an aspect ratio of greater than 10.

Methods for determining the particle dimension include optical or scanning electron microscopy, or atomic force microscopy (AFM) imaging.

For measuring the dimensions of the nano particles the particles are in a very dilute mixture applied on a surface, so that at a SEM photographic image the single nano particles are observable. After that from 100 nano particles, ad random selected, the dimensions are determined and the average value is taken. The length is determined, from one end to the other end, by following the primary axis as projected in the plane of the photo. For the diameter the longest straight line that can be drawn from one side of the particle to the other side, perpendicular to the primary axis is taken.

The liquid crystal compounds are for example in a certain temperature range and in a certain concentration range in the liquid crystal state. The liquid crystal state is a distinct phase of matter observed between the solid crystalline state and the liquid, isotropic state. In the liquid crystal state the compound molecules are ordered in at least one direction. Preferably the liquid crystal compound is in the nematic or smectic phase. The nematic phase is characterized by molecules that have no positional order but tend to point in the same direction, along a so-called director. In the smectic phase the molecules are more ordered than in the nematic phase. In the smectic phase the molecules maintain the rotational symmetry of the nematic phase, but also tend to align themselves in planes. Motion of the molecules is restricted to within these planes, and separate planes are observed to flow past each other.

Liquid crystalline compounds of the present invention preferably comprise at least a mesogenic group or 'rigid rod' group. It is possible that as the liquid crystal compound a monomer, an oligomer or a polymer is used. An oligomer and a polymer comprise repeating units in the mesogenic group. The liquid crystal compound comprises preferably at least one polymerizable group. More preferably at least part of the crystalline compounds comprise at least two polymerizable groups.

Preferably the polymerizable group is a group that can be polymerized with a radical polymerization or a cationic polymerization reaction. Examples of suitable polymerizable groups are (meth)acrylate, epoxy, vinyl, vinylether, ene, vinylesters, bismaleimide. Preferably, acrylate, methacrylate or epoxy functional groups are used.

The mesogenic group can be any group that is able to make liquid crystals. A variety of mesogen materials may be used, such as cyclic compounds and their various derivatives. Examples of suitable mesogenic groups include spiro and naphthenic compounds; trans-cyclohexyl analogues; biphenyl, e.g. dioxy biphenyl; aromatic esters and diesters; 1,2, bis (oxyphenyl) ethane, 4,4'biphenol; methylstilbene, 4,4'-dihydroxy methyl stilbene, terphenyl, biacetylene, bi- and tri-phenylene, p-ethylenbenzoyl esters, azobenzene, and hydroquinone-based bismaleimide whether the preceding are substituted or unsubstituted, as well as other mesogens of the types known to the art. The mesogenic groups based on 1,4-bis (benzoyloxy)phenylene are preferred. It has been found possible to lower the true melting point of the monomers, sometimes desirable, by introducing a degree of asymmetry in the monomers, for example, by putting a substituent, for instance, F, Cl, CN or CH₃ on a cyclic group.

Preferably a spacer group is present between the mesogenic group and the polymerizable group. The function of the spacer group may be twofold: a spacer group may be present to secure the reactivity of the polymerizable group in view of the presence of the mesogenic group. Also a spacer group may be present to enhance the amount of liquid crystalline domains, to enhance the polymerization speed due to a better alignment of the polymerizable groups, or to influence the structure of the liquid crystalline domains. Various spacer groups which have been found useful, including spacer groups such as poly(oxyethylene) groups, -CH₂-, -CH₂O-, poly(methylene) groups etc. Preferably it has been found to employ from at least 1 to about 18 spacer atoms derived from such groups between each of the functional terminal, or end groups, and the mesogen groups. More preferably the spacer group employs between 1 and 10 spacer atoms. Most preferably, the spacer group employs between 2 and 6 spacer atoms. The number of spacer atoms is the number of atoms that form a bridge between the mesogenic group and the polymerizable group. For example a spacer group with the structure -CH₂CH₂- contains 2 spacer atoms, and a CH₂-CH₂-O- group contains 3 spacer atoms.

The composition may comprise other components in addition to the liquid crystal compound.

For example liquid crystal diluents may be present, that do not copolymerize with the liquid crystal compound and which may have the following general structure: 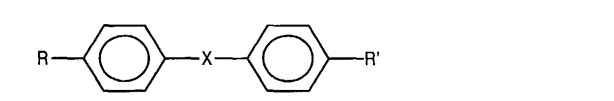 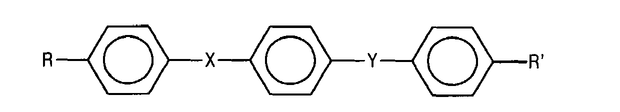
where R and R' are independently alkyl, alkoxyl, acyloxyl, alkylcarbonate, alkoxycarbonyl, all groups having from 1 to 20 carbon atoms, or halo-, nitro-, or cyano-groups. X and Y are connecting bonds between the aromatic rings or groups such as for example -N=N-, -CH=CH-, -CH=N-, -COO-, or -C=C-.

It is also possible that the composition comprises further non-elongated fillers.

Preferably the composition comprising the nano particles used in the process according to the invention is a coating composition. In a coating the elongated particles are very well oriented and many suitable applications are possible.

The composition is preferably brought in the liquid crystal state by bringing the composition at a temperature where the liquid crystal compound is in the liquid crystal phase (thermo tropic liquid crystals). However in case of a lyotropic liquid crystal compound it is possible to bring the compound in the liquid crystal phase by changing the concentration of the compound in its solution.

Macroscopic orientation of the liquid crystal compounds and the elongated nano particles may be achieved by using for example surface-active agents, rubbed substrates such as polyimide and polyester substrates, application of a magnetic or electric field, and by a flow. Preferably the macroscopic orientation is performed by application of surface active agents or by applying the composition on a rubbed substrate. For applying the macroscopic orientation there is further referred to Blinov I.M., Electro-optical and Magneto-optical properties of liquid crystals, 1983, John Wiley and sons, New York.

Fixation of the orientation may be obtained by cooling the composition, by evaporation of a solvent or by polymerization of the liquid crystal compound. Preferably the fixation of the orientation is obtained by polymerization of the liquid crystal compound.

The liquid crystal compound may be polymerized by using a thermal or a radiation curing system. Preferably a radiation curing system is used. In that way the formation of liquid crystals, which is for example depending on the temperature of the composition, and the polymerization reaction, which is started by irradiation, will be independent. The process will thereby be better controlled, resulting in products having superior properties.

Examples of radiation curing systems are curing systems activated by visible light, ultraviolet light, infrared light, X-rays, α-rays, β-rays, γ-rays, and the like. Preferably a UV curing system is used.

Examples of suitable initiators are radical photo initiators like 1-hydroxycyclohexyl phenyl ketone, 2,2-dimethoxy-2-phenylacetophenone, xanthone, fluorenone, benzaldehyde, fluorene, anthraquinone, triphenylamine, carbazole, 3-methylacetophenone, 4-chlorobenzophenone, 4,4'-dimethoxybenzophenone, 4,4'-diaminobenzophenone, Michler's ketone, benzoin propyl ether, benzoin ethyl ether, benzyl dimethyl ketal, 1-(4-isopropylphenyl)-2-hydroxy-2-methylpropan-1-one, 2-hydroxy-2-methyl-1-phenylpropan-1-one, thioxanethone, diethylthioxanthone, 2-isopropylthioxanthone, 2-chlorothioxanthone, 2-methyl-1-[4-(methylthio)phenyl]-2-morpholino-propan-1-one, 2,4,6-trimethylbenzoyldiphenylphosphine oxide and bis-(2,6-dimethoxybenzoyl)-2,4,4-trimethylpentylphosphine oxide.

Examples of a cationic photo initiator are onium salts having cations like for example diphenyliodonium, 4-methoxydiphenyliodonium, bis(4-methylphenyl)iodonium, bis(4-tert-butylphenyl)iodonium, bis(dodecylphenyl)iodonium, triphenylsulfonium, diphenyl-4-thiophenoxyphenylsulfonium, bis[4-(diphenylsulfoniophenyl]sulfide, bis[4-(di(4-(2-hydroxyethyl)phenyl)sulfonio)phenyl]sulfide,

η5-2,4-(cyclopentadienyl)[1,2,3,4,5,6-η]-(methylethyl)-benzene]-iron(1+) and the like. Usually anions are present like for example tetrafluoroborate (BF4-), hexafluorophosphate (PF6-), hexafluoroantimonate (SbF6-), hexafluoroarsenate (AsF6-), hexachloroantimonate (SbC16-), and the like.

In addition, iron/allene complex initiators, aluminum complex/photolysis silicon compound initiators, and the like can also be given as examples of cationic photopolymerization catalysts.

In a preferred embodiment the elongated nano particles are electrically conductive.
In this way a composition is produced having a high electrically conductivety.

Electrically conductive compositions are known for many years. One class of electrically conductive compositions are compositions comprising intrinsically electrically conductive polymers, like polypyrroles. Such polymers however are difficult to produce and difficult to process into shaped objects. Another class of electrically conductive compositions comprises compositions comprising polymers and electrically conductive fillers or fibers. Such compositions have an electrically conductivity ranging form highly conductive, suitable for providing shielding to electromagnetic radiation, to low conductive, suitable for discharging objects being charge with static electricity.

Surprisingly with the process of the present invention a composition is obtained having a high electric conductivity, with a relative small amount of elongated nano particles. The process is also favorable as the electrically conductive composition can easily be produced in this way.

Furthermore the composition shows an-isotropic electrical conductivity.

Good results are obtained if elongated nano particles of metals or carbon nano tubes are used as the electrically conductive nano particles. Preferably carbon nano tubes are used as the electrically conductive nano particles.

Carbon nana tubes used in the present invention may have a diameter less than 30 nm, preferably less than about 10 nm, and even more preferably less than 3 nm. The carbon nano tubes may be single or multi-wall carbon nano tubes. Carbon nano tubes are commercial available from Nanoledge, Carbon Nanotechnologies Inc., Rosseter Holding Ltd., or Nanocyl.

Preferably the surface of the carbon nano tubes is grafted with organic molecules, so that the carbon nano tubes comprise organic groups on their surface to enhance the dispersion of the nano tubes in the composition. More preferably the organic groups comprise subgroups that are reactive with the polymerizable groups of the liquid crystal compound, for example acrylate subgroubs. In this way an even still better dispersion of the carbon nano tubes is obtained.

Preferably the composition comprises next to the elongated electrically conductive nano particles also non-elongated electrically conductive nano particles, as for example carbon black and bucky balls. In this way the composition according to the invention shows a very high conductivity and it is still very well processable.

The invention also relates to objects comprising the composition obtainable by the process of the present invention, preferably to objects comprising a layer of the composition obtainable by the process according to the present invention.

Application of the composition produced by the process of the present invention is for example in anisotropic optical coating applied on wide viewing angle films for displays, and conductive layers in TFT screens.

### Example 1

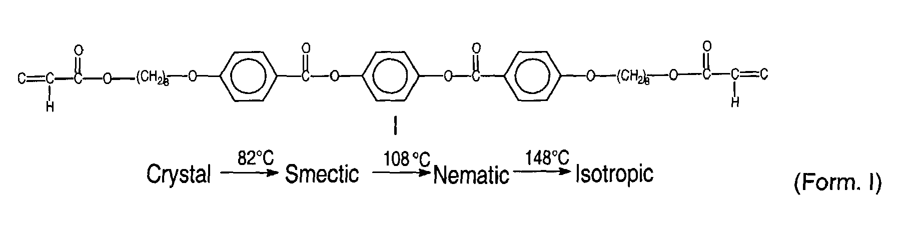

A solution was prepared by sonicating a mixture of 0.5 mg single walled carbon nano tubes, purchased from Aldrich (Carbolex SE-grade, 1.2-1.5 nm diameter) in 50 g 1,2-dicholrobenzene for 1 hour. At this concentration, nanotubes are still well below their solubility limit of 95 mg/l in 1,2-dichorobenzene. After further dissolving in the solution 50 mg liquid crystal compound according to Form. 1 and 0.5 mg of a photoinitiator, the solution was spin coated at 4000 rpm onto a glass slide. In order to induce macroscopic orientation in the coating, the coated glass slides were placed in a Bruker Mini Spec (nms 1000) operating at a field of 0.4 Tesla. The direction of the magnetic field was parallel to the surface of the glass slides. The samples were first heated to the isotropic phase and then cooled down very slowly into the liquid crystal phase, i.e. 120°C. Using this procedure, the macroscopic planar orientation of these low molecular weight liquid crystal compounds is guaranteed. The coated glass slides were heated in a Mettler hot stage and photopolymerized in situ for three minutes using a MACAM Photometrics UV-source (Model UVLS 101-8, Livingston, Scothland). The thickness of the so obtained coating was about 30nm. AFM images of the sample revealed a significant orientation of the carbon nano tubes.

### Comparative experiment A

Experiment I was repeated, however step of macroscopic orientation by the magnetic field was omitted. An AFM image showed that there was no orientation of the carbon nano tubes .

### Experiment II

Experiment I was repeated, however 5 mg of acrylate functionalised carbon nano tubes were used. AFM images showed a significant orientation of the carbon nano tubes. A mobility measurement showed a value in access of 10⁻² cm².V⁻¹.s⁻¹.

## Claims

1. Process for producing a composition, comprising nano particles, the process comprising the steps of,
a) bringing a composition comprising a liquid crystal compound and elongated nano particles at a condition wherein the liquid crystal compound is in the liquid crystal state,
b) orientation of the liquid crystal compound and the elongated
c) fixation of the so obtained orientation.

2. Process according to claim 1, wherein as elongated nano particles SiO₂, VOₓ, MoO₃, carbon nano tubes or elongated nano particles of Aluminum (Al), Copper (Cu) and Iron (Fe) are used.

3. Process according to any one of claims 1 or 2, wherein the composition comprising the liquid crystal compound and the elongated nano particles is a coating composition.

4. Process according to any one of claims 1 -3 , wherein in step b) the orientation is performed by application of surface active agents or applying the composition on a rubbed substrate.

5. Process according to any one of claims 1 - 4, wherein step c the fixation is obtained by polymerization of the liquid crystal compound.

6. Process according to claim 5, wherein the liquid crystal compound is polymerized by a radiation curing system.

7. Process according to anyone of claims 1-6, wherein as elongated nano particles electrically conductive nano particles are used.

8. Process according to claim 7, wherein as electrically conductive nano particles carbon nano tubes are used.

9. Composition obtainable by the process according to any one of claims 1-8.

10. Object comprising a layer of the composition according to claim 9.
